# EUROPÄISCHE PATENTSCHRIFT

(11) **EP 2 543 445 B1**
(45) Veröffentlichungstag und Bekanntmachung des Hinweises auf die Patenterteilung: **20.03.2019**
(21) Anmeldenummer: 12002289.2
(22) Anmeldetag: 29.03.2012
(51) Int. Cl.: B05C 5/00, B60J 1/00, C03C 27/04, B05C 5/02, E05D 5/02

(54) **Vorrichtung und Verfahren zum Kleben von Beschlagteilen auf Glasscheiben**
Device and method for gluing fitting parts to glass panes
Dispositif et procédé de collage de parties de ferrure sur des vitres

(30) Priorität: 04.05.2011 DE 102011050105
(43) Veröffentlichungstag der Anmeldung: 09.01.2013
(73) Patentinhaber: dormakaba Deutschland GmbH, 58256 Ennepetal (DE)
(72) Erfinder: Vogler, Thomas, 32108 Bad Salzuflen (DE); Walhorn, Oliver, 33824 Werther (DE)
(74) Vertreter: Balder IP Law, S.L.

(56) Entgegenhaltungen:
- EP-A2- 1 510 163
- JP-A- 2008 238 954
- US-A- 5 246 331

## Beschreibung

Die vorliegende Erfindung betrifft eine Vorrichtung und ein Verfahren zum Kleben von Beschlagteilen auf Glasscheiben nach Anspruch 1 und 15.

Beschläge für Drehflügeltüren oder Schiebetüren aus Glas werden in der Regel durch Klemmung der Glasscheibe oder durch eine Bohrung im Glas mit der Tür verbunden. Bei der Klemmung der Glasscheibe, wie dies oft bei Rollenwagen für Schiebetüren angewendet wird, befindet sich der Beschlag immer im Randbereich der Glasscheibe, da zwangsläufig beide Seiten der Glasscheibe mit Druck beaufschlagt werden. Der notwendige Klemmdruck wird über eine Verspanneinrichtung erzeugt, die oberhalb der Glaskante bzw. Stirnkante der Glasscheibe angeordnet ist. Dadurch kann diese Klemmbefestigung in der Höhe nicht so kompakt gebaut werden, wie dies für ein ansprechendes Design nötig ist. Die Höhe der Klemmbefestigung wirkt sich dabei auf die Höhe der Laufschiene aus, was ebenfalls zu keinem gefälligen Design führt.

Bei einer Befestigung des Beschlages mittels einer Bohrung oder eines Ausschnittes an der Glasscheibe, bei der die Beschlaghälften über ein Befestigungselement verbunden werden, das durch die Glasscheibe reicht, besteht immer die Gefahr des Glasbruches. Ein weiterer Nachteil sind die Herstellkosten und das recht aufwändige Verfahren, womit ein Ersatz der Glasscheibe oder ein Anpassen auf der Baustelle fast nicht möglich ist.

Um diese Probleme zu umgehen, sind seit längerem Beschläge bekannt, die mit der Glasscheibe verklebt werden. Bei einer stirnseitigen Verklebung des Beschlages muss eine gewisse Länge bzw. Fläche der Stirnkante zur Verfügung stehen, damit eine sichere Verklebung erreicht wird. Ein Beschlag, der ein filigranes Aussehen erhalten soll, ist damit nur eingeschränkt möglich.

In der JP 2008 238954 wird das Kleben einer Glasscheibe auf ein Profil beschrieben. Hierbei wird auf das Profil ein doppelseitiges Klebeband aufgebracht.

In der US 5 246 331 wird ein Montagetisch beschrieben, auf dem in einfacher Art und Weise ein Dichtstreifenmaterial auf die Umfangskanten einer Glasscheibe aufgebracht werden kann.

In der EP 1 510 163 wird beschrieben, dass das Beschlagteil aus Glas oder aus einem Material mit selbigen Wärmeausdehnungskoeffizienten wie Glas besteht.

In der DE 10002679 A1 wird ein Beschlag aus einem metallischen Werkstoff beschrieben, der ausschließlich auf der Glasfläche aufgeklebt ist. In das mit der Glasscheibe verklebte Beschlagunterteil greift ein Beschlagoberteil ein, an dem über ein Lagerauge der zweite Bandlappen angeordnet ist. Das für den Nutzer sichtbare Bandauge ist dabei nicht kompakt genug, um die heutigen Designanforderungen zu erfüllen.

Ein Nachteil bei den bisherigen geklebten Beschlägen ist, dass diese manuell und einzeln auf der Baustelle aufgeklebt werden. Aufgrund der sehr störungsanfälligen Klebeparameter kann der Klebevorgang weder reproduziert, noch der Klebeprozess garantiert werden. Das Abfallen von geklebten Beschlägen kann die Folge sein, wodurch es zum Glasbruch und zu schweren Verletzungen bei den Benutzern von Duschen und Türen kommen kann. Dabei ist es nach dem Glasbruch oft nicht mehr möglich, die Ursache für das Versagen der Klebestelle herauszufinden.

Daher ist es Aufgabe der Erfindung, eine Vorrichtung und ein Verfahren zum Kleben von Beschlagteilen auf Glasscheiben zu schaffen, das in großer Stückzahl ein einfaches und preiswertes Verkleben ermöglicht, und gleichzeitig ein reproduzierbares Verkleben zulässt.

Die Lösung erfolgt durch die Merkmale von Anspruch 1 und 15. Vorteilhafte Ausgestaltungen werden mit den Merkmalen der Unteransprüche erzielt.

Die Erfindung zeichnet sich durch eine Klebevorrichtung aus, die einen Tisch zum Auflegen einer Glasscheibe aufweist, des weiteren eine Aufnahme für ein Beschlagteil, eine Dosiereinrichtung zum Zuführen von Klebstoff, eine Aushärtevorrichtung und eine Steuerung. Mittels der Dosiervorrichtung wird der Klebstoff auf das Beschlagteil aufgetropft und die Aufnahme positioniert das Beschlagteil zum Verkleben auf die Unterseite der Glasscheibe. Damit gelangt der Kleber blasenfrei auf das Beschlagteil und wird auf der Unterseite der Glasscheibe mit dieser verklebt. Die Aufnahme kann konstruktiv einfach ausgeführt werden, da durch das Einlegen des Beschlagteiles in die Aufnahme das Beschlagteil nicht fixiert werden muss. Weiterhin kann durch die Glasscheibe direkt eine Sichtprüfung der Klebestelle erfolgen.

Eine vorteilhafte Ausgestaltung sieht vor, dass die Klebevorrichtung eine Klebemaschine aufweist, an oder auf der die Aufnahme und/oder die Aushärtevorrichtung angeordnet ist. In Kombination mit der Steuerung kann der Klebevorgang automatisiert ablaufen, da die Klebemaschine und die Aufnahme verfahrbar ausgebildet sind und das Beschlagteil selbstständig positionieren können.

Eine bevorzugte Ausgestaltung ergibt sich dadurch, dass mittels der Steuerung die Auftragsdaten und Klebeparameter in einen Transponder in das Beschlagteil abgespeichert werden können. Hierzu weist das Beschlagteil einen Transponder auf, der zur Identifikation des Beschlages dient und der alle Herstellparameter aufzeichnet. Damit lässt sich ein Originalbeschlag von einer Kopie zuverlässig unterscheiden. Des Weiteren lassen sich bei einem Versagen der Klebestelle nachträglich die Klebeparameter ermitteln und damit die Ursache des Qualitätsproblems erkennen.

Das Verfahren zum Verkleben von Beschlagteilen zeichnet sich dadurch aus, dass auf das Beschlagteil eine dosierte Menge Kleber getropft, und das Beschlagteil unter der Glasscheibe positioniert wird, und an der Unterseite der Glasscheibe verklebt wird. Die weiteren Unteransprüche des Verfahrens dienen dem automatisierten Verkleben von Beschlagteilen mit einer Glasscheibe.

Weitere, die Erfindung verbessernde Maßnahmen werden nachstehend gemeinsam mit der Beschreibung eines bevorzugten Ausführungsbeispiels der Erfindung anhand der einzigen Figur näher dargestellt.

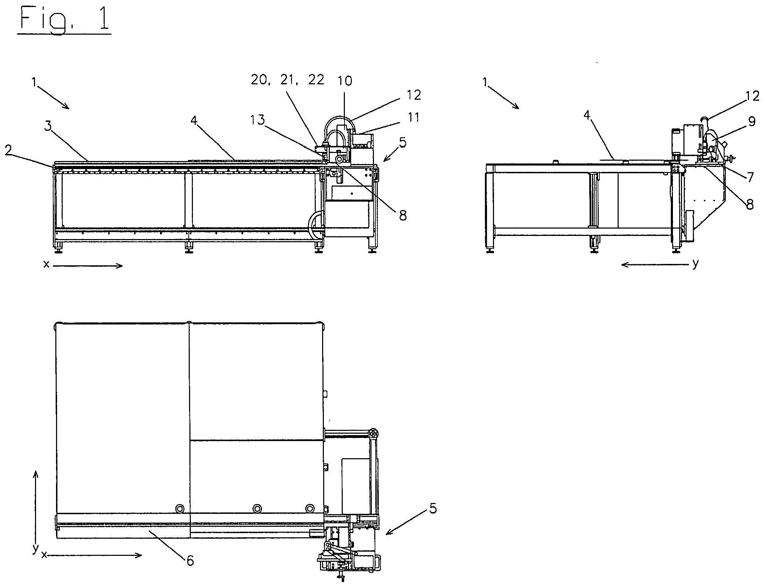

Figur 1 zeigt eine Klebevorrichtung in den drei Ansichten als Vorder- und Seitenansicht, sowie als Draufsicht.

Die Klebevorrichtung 1 nach Figur 1 umfasst im wesentlichen einen Tisch 2, eine Aufnahme 8 für ein Beschlagteil, eine Dosiervorrichtung 10, eine Aushärtevorrichtung 20 und eine Steuerung 9.

Der Tisch 2 weist eine Größe auf, die geeignet ist, eine Glasscheibe 4 in der Größe einer Drehflügeltür, Schiebetür oder Schiebewand aufzunehmen. Die Glasscheibe 4 liegt dabei auf dem Tisch 2 mit einer Oberfläche eben auf. Auf dem Tisch 2 befindet sich eine Auflage mit Bürsten 3, so dass die Glasscheibe 4 auch mit vormontierten Beschlägen, wie z.B. einem Türschloss, eben auf den Tisch 2 aufgelegt werden kann. Die Glasscheibe 4 liegt also mit der Unterseite auf den Bürsten 3 auf. Damit die Glasscheibe 4 während des Klebevorganges nicht verrutschen kann, wird diese auf dem Tisch 2 pneumatisch, hydraulisch oder mechanisch fixiert.

Seitlich am Tisch 2 ist eine Klebemaschine 5 angeordnet, die in horizontaler Richtung entlang des Tisches 2 mittels einer Positioniervorrichtung 6 positioniert und verfahren werden kann. Dieser Verfahrweg bzw. die Verfahrrichtung entlang des Tisches 2 ist mit X gekennzeichnet. Das Verfahren der Klebermaschine 5 entlang des Verfahrweges erfolgt automatisch mittels elektrischer Motoren. Die Klebemaschine 5 weist weiterhin eine Aufnahme 8 auf, in die ein Beschlagteil eingelegt werden kann. Als Beschlagteil kann ein Bauelement oder ein Adapter zur Aufnahme oder zur Befestigung eines Beschlages, wie die Anbindung an einen Rollenwagen einer Schiebetür, ein Drehbeschlag für eine Drehflügeltür, oder für die Montage eines Türöffners oder Türantriebes angesehen werden. Die Aufnahme 8 kann mittels eines Schlittens 7 zum Tisch 2 hin- und weggefahren werden. Diese Richtung ist in der Figur 1 mit der Verfahrrichtung Y gekennzeichnet. In die Aufnahme 8 wird das Beschlagteil eingelegt, so dass die Verklebung mit der Scheibenunterseite erfolgt. Weiterhin weist die Aufnahme 8 eine nicht dargestellte Anpressvorrichtung auf, mit der das Beschlagteil gegen die Unterseite der Glasscheibe 4 gepresst wird.

An der Klebemaschine ist eine Dosiervorrichtung 10 angeordnet, die aus einem Tank 11 mittels einer Leitung 12 flüssigen Klebstoff zu einer Dosiernadel 13 fördert. Der Tank 11 steht leicht unter Überdruck und ist so angeordnet, dass der Klebstoff mittels Schwerkraft auf das Beschlagteil getropft werden kann. Dies hat den Vorteil, dass eine Blasenbildung beim Verkleben vermieden wird. Ein weiterer Vorteil dieser Anordnung, bei der das Beschlagteil mit der Unterseite der Glasscheibe 4 verklebt wird, liegt darin, dass ein Ziehen von Tropfen während des Klebevorganges vermieden wird. Die Kombination aus Auftropfen des Klebers mittels Schwerkraft und Verkleben auf der Unterseite der Glasscheibe 4 garantiert eine blasenfreie und optisch einwandfreie Verklebung.

Alternativ kann der Kleber auch bei entsprechender Positionierung auf die Glasscheibe 4 von oben aufgetropft werden. Dies hätte den qualitativ gleichen Effekt wie das zuvor beschriebene Verfahren. Von Nachteil ist allerdings, dass bei einer Fehlklebung die Glasscheibe 4 aufwändig gereinigt werden muss. Bei dem erfindungsgemäßen Verfahren braucht hingegen nur das Beschlagteil ausgetauscht zu werden. Dies geht deutlich schneller und kosteneffizienter. Weiterhin kann bei einer Verklebung auf der Unterseite der Glasscheibe 4 direkt eine Sichtkontrolle erfolgen, da die Klebestelle durch die Glasscheibe sichtbar ist. Ein weiterer Vorteil liegt darin, dass die Aufnahme 8 konstruktiv sehr einfach gehalten werden kann, da diese das Beschlagteil nur aufnehmen und positionieren muss, und nicht das Beschlagteil klammern beziehungsweise fixieren braucht. Der Verzicht auf ein Fixieren oder Klammern des Beschlagteiles ermöglicht die konstruktiv einfache Aufnahme von Beschlagteilen in unterschiedlicher Gestaltung.

Die Aushärtevorrichtung 20 ist ebenfalls auf dem Schlitten 7 angeordnet und verfährt, nach dem die Aufnahme 8 mit dem Beschlagteil unter die Glasscheibe 4 verfahren ist, über die Glasscheibe 4 an die Klebestelle.

Die Aushärtevorrichtung 20 soll den Aushärtevorgang deutlich verkürzen und umfasst im wesentlichen einen Strahler 21 und eine Messvorrichtung 22. Der Strahler 21 kann als Punktstrahler ausgebildet sein, um eine hohe Belichtungsintensität über eine vorgegebene Belichtungszeit abgeben zu können. Mittels der Messvorrichtung 22 werden der Belichtungsabstand, die Belichtungszeit und die Belichtungsintensität eingestellt und kontrolliert.

Die Steuerung 9 ist ausgebildet, das Beschlagteil genau unter der Glasscheibe 4 automatisch zu positionieren. Darüber hinaus erfasst die Steuerung 9 alle relevanten Parameter zur Verklebung des Beschlagteiles, wie z.B. die Raumtemperatur, die relative Luftfeuchtigkeit, die Temperatur der Glasscheibe 4, die Anpresskraft der Aufnahme 8 auf das Beschlagteil beim Klebevorgang, den Klebstoff, die Menge des verwendeten Klebstoffes, die Belichtungsintensität, die Belichtungszeit und den Belichtungsabstand. Diese Parameter werden über die Steuerung 9 zur Steuerung des Klebevorganges verarbeitet und beim Klebevorgang neben weiteren Auftragsdaten in einen integrierten Transponder des Beschlagteiles abgespeichert. Sollte zu einem späteren Zeitpunkt ein Qualitätsproblem auftreten, kann durch das Auslesen des Transponders die Ursache analysiert werden.

Die erfindungsgemäße Klebevorrichtung 1 ist damit geeignet, serienmäßig und in großer Stückzahl Beschlagteile auf unterschiedliche Glasscheiben 4 zu kleben, an denen Beschläge befestigt werden können. Im Gegensatz zu bisher manuell verklebten Beschlägen wird der Klebevorgang reproduzierbar und damit ein Qualitätsniveau erreicht, bei dem ein Versagen der Verklebung fast ausgeschlossen werden kann.

Das Verfahren zum Kleben eines Beschlagteiles auf eine Glasscheibe 4 erfolgt mit den folgenden vollständigen Verfahrensschritten:
1. Auflegen der Glasscheibe 4 auf den Tisch 2.
2. Ermittlung der Kanten der Glasscheibe 4 als XY-Koordinaten.
3. Eingabe der Auftragswerte und Klebeparameter in die Steuerung 9.
4. Befestigung der Glasscheibe 4 auf dem Tisch 2.
5. Beschlagteil in Aufnahme 8 einlegen.
6. Verfahren des Beschlagteiles unter die Dosiervorrichtung 10.
7. Dosierte Menge Kleber auf Beschlagteil tropfen lassen.
8. Beschlagteil unter der Glasscheibe 4 positionieren.
9. Beschlagteil von unten an die Glasscheibe 4 drücken, gleichzeitig Daten in Transponder speichern.
10. Strahler 21 einschalten zum Aushärten des Klebers.

Beim Verkleben von weiteren Beschlagteilen an derselben Glasscheibe erfolgt eine Wiederholung der Verfahrensschritte 5 bis 10.

Wesentliche Verfahrensschritte sind das Verfahren des Beschlagteiles unter die Dosiervorrichtung 10, so dass mittels Schwerkraft eine dosierte Menge Kleber auf das Beschlagteil gelangen kann. Damit wird eine Blasenbildung, die wesentliche Ursache beim Versagen von Klebestellen, vermieden. Durch das anschließende Positionieren des Beschlagteiles unter die Glasscheibe 4 und das Andrücken des Beschlagteiles auf die Unterseite der Glasscheibe 4 kann die Aufnahme 8 konstruktiv einfach und preiswert ausgeführt werden. Die gesamte Klebevorrichtung 1 wird preiswerter und der Klebevorgang schneller.

### Bezugszeichenliste

- 1: Klebevorrichtung
- 2: Tisch
- 3: Bürsten
- 4: Glasscheibe
- 5: Klebemaschine
- 6: Positioniereinrichtung
- 7: Schlitten
- 8: Aufnahme
- 9: Steuerung
- 10: Dosiervorrichtung
- 11: Tank
- 12: Leitung
- 13: Dosiernadel

- 20: Aushärtevorrichtung
- 21: Strahler
- 22: Messvorrichtung

- X: Verfahrrichtung
- Y: Verfahrrichtung

## Patentansprüche

1. Klebevorrichtung zum Kleben von Beschlagteilen auf Glasscheiben, mit einem Tisch (2) zum Auflegen von Glasscheiben (4), einer Aufnahme (8) für ein Beschlagteil, einer Dosiervorrichtung (10) zum Zuführen von Klebstoff, einer Aushärtevorrichtung (20) und einer Steuerung (9), **dadurch gekennzeichnet, dass** mittels der Dosiervorrichtung (10) der Klebstoff auf das Beschlagteil aufgetropft wird und die Aufnahme (8) das Beschlagteil zum Verkleben auf die Unterseite der Glasscheibe (4) positioniert.

2. Klebevorrichtung nach Anspruch 1, **dadurch gekennzeichnet, dass** der Tisch (2) eine Auflage mit Büsten (3) aufweist.

3. Klebevorrichtung nach Anspruch 1 oder 2, **dadurch gekennzeichnet, dass** der Tisch (2) eine Vorrichtung zum Fixieren der Glasscheibe (4) aufweist.

4. Klebevorrichtung nach Anspruch 1, **dadurch gekennzeichnet, dass** die Klebevorrichtung (1) eine Klebemaschine (5) aufweist, auf oder an der die Aufnahme (8) und Aushärtevorrichtung (20) angeordnet ist.

5. Klebevorrichtung nach Anspruch 4, **dadurch gekennzeichnet, dass** die Klebemaschine (5) entlang des Tisches (2) mit einer Verfahrrichtung (X) verfahren kann.

6. Klebevorrichtung nach Anspruch 1, **dadurch gekennzeichnet, dass** die Aufnahme (8) entlang eines Verfahrweges (Y) verfahren kann.

7. Klebevorrichtung nach Anspruch 5 und/oder 6, **dadurch gekennzeichnet, dass** das Verfahren der Klebemaschine (5) und der Aufnahme (8) motorisch erfolgt.

8. Klebevorrichtung nach Anspruch 7, **dadurch gekennzeichnet, dass** die Klebemaschine (5) und die Aufnahme (8) je eine Positioniereinrichtung (6) aufweist.

9. Klebevorrichtung nach Anspruch 1, **dadurch gekennzeichnet, dass** die Aufnahme (8) eine Anpressvorrichtung zum Anpressen des Beschlagteiles an die Glasscheibe (4) aufweist.

10. Klebevorrichtung nach Anspruch 1, **dadurch gekennzeichnet, dass** die Dosiervorrichtung (10) einen Tank (11) aufweist, von dem aus der Klebstoff mittels einer Leitung (12) zu einer Dosiernadel (13) gefördert wird.

11. Klebevorrichtung nach Anspruch 10, **dadurch gekennzeichnet, dass** der Tank (11) unter Druck steht.

12. Klebevorrichtung nach Anspruch 1, **dadurch gekennzeichnet, dass** die Aushärtevorrichtung (20) einen Strahler (21) und eine Messvorrichtung (22) aufweist.

13. Klebevorrichtung nach einem der vorhergehenden Ansprüche, **dadurch gekennzeichnet, dass** die Steuerung (9) das Beschlagteil automatisch unter die Glasscheibe (4) positioniert.

14. Klebevorrichtung nach einem der vorhergehenden Ansprüche, **dadurch gekennzeichnet, dass** die Steuerung (9) alle relevanten Klebe- und Auftragsparameter in einen Transponder abspeichert, der Bestandteil des Beschlagteiles ist.

15. Verfahren zum Kleben von Beschlagteilen an Glasscheiben, wobei auf das Beschlagteil mittels einer Dosiervorrichtung (10) eine dosierte Menge Kleber getropft wird, und das Beschlagteil unter der Glasscheibe (4) positioniert wird und an der Unterseite der Glasscheibe (4) verklebt wird.

16. Verfahren zum Kleben von Beschlagteilen an Glasscheiben nach Anspruch 15, **dadurch gekennzeichnet, dass** das Beschlagteil mittels einer Klebemaschine (5) und einer Aufnahme (8) verfahren wird.

17. Verfahren zum Kleben von Beschlagteilen an Glasscheiben nach Anspruch 15, **dadurch gekennzeichnet, dass** die Kanten der Glasscheibe (4) als XY-Koordinaten erfasst und die Auftragswerte und Klebeparameter in einer Steuerung (9) abgespeichert werden.

18. Verfahren zum Kleben von Beschlagteilen an Glasscheiben nach Anspruch 16 und 17, **dadurch gekennzeichnet, dass** eine Steuerung (9) die Klebemaschine (5) und die Aufnahme (8) mit dem Beschlagteil automatisch unter die Dosiervorrichtung (10) und danach unter der Glasscheibe (4) positioniert und das Beschlagteil an die Glasscheibe (4) andrückt.

19. Verfahren zum Kleben von Beschlagteilen an Glasscheiben nach Anspruch 18, **dadurch gekennzeichnet, dass** mittels der Steuerung (9) die Auftragswerte und Klebeparameter in einem Transponder des Beschlagteiles abgespeichert werden.

20. Verfahren zum Kleben von Beschlagteilen an Glasscheiben nach Anspruch 18, **dadurch gekennzeichnet, dass** die Aushärtezeit des Klebers mittels eines Strahlers (21) verkürzt wird.

21. Verfahren zum Kleben von Beschlagteilen auf Glasscheiben, mit einer Vorrichtung nach den Ansprüchen 1 bis 14.

## Claims

1. A gluing device for gluing fitting parts onto glass panes, with a table (2) for placing glass panes (4), a reception (8) for a fitting part, a dosing mechanism (10) for feeding adhesive, a curing device (20), and control (9), **characterized in that** by means of the dosing mechanism (10) the adhesive is applied by dropping onto the fitting part, and the reception (8) positions the fitting part for gluing to the underside of the glass pane (4).

2. The gluing device according to claim 1, **characterized in that** the table (2) includes a support with brushes (3).

3. The gluing device according to claim 1 or 2, **characterized in that** the table (2) includes a device for immobilising the glass pane (4).

4. The gluing device according to claim 1, **characterized in that** the gluing device (1) includes a gluing machine (5), on or at which the reception (8) and the curing device (20) are disposed.

5. The gluing device according to claim 4, **characterized in that** the gluing machine (5) may be displaced along the table (2) according to a displacement direction (X).

6. The gluing device according to claim 1, **characterized in that** the reception (8) may be displaced along a displacement path (Y).

7. The gluing device according to claim 5 and/or 6, **characterized in that** the displacing of the gluing machine (5) and of the reception (8) is realized by motor.

8. The gluing device according to claim 7, **characterized in that** the gluing machine (5) and the reception (8) each include a positioning device (6).

9. The gluing device according to claim 1, **characterized in that** the reception (8) includes a pressing device for pressing the fitting part against the glass pane (4).

10. The gluing device according to claim 1, **characterized in that** the dosing mechanism (10) includes a reservoir (11), from which the adhesive is transported by means of a conduct (12) to a dosing needle (13).

11. The gluing device according to claim 10, **characterized in that** the reservoir (11) is pressurized.

12. The gluing device according to claim 1, **characterized in that** the curing device (20) includes a lamp (21) and a measuring device (22).

13. The gluing device according to any of the preceding claims, **characterized in that** the control (9) automatically positions the fitting part under the glass pane (4).

14. The gluing device according to any of the preceding claims, **characterized in that** the control (9) saves all relevant gluing and application parameters in a transponder, which is a component of the fitting part.

15. A method for gluing fitting parts to glass panes, wherein a measured quantity of adhesive is applied by dropping onto the fitting part by means of a dosing mechanism (10), and the fitting part is positioned under the glass pane (4) and glued to the underside of the glass pane (4).

16. The method for gluing fitting parts to glass panes according to claim 15, **characterized in that** the fitting part is displaced by means of a gluing machine (5) and a reception (8).

17. The method for gluing fitting parts to glass panes according to claim 15, **characterized in that** the edges of the glass pane (4) are detected as XY-coordinates, and the application values and gluing parameters are stored in a control (9).

18. The method for gluing fitting parts to glass panes according to claim 16 and 17, **characterized in that** a control (9) automatically positions the gluing machine (5) and the reception (8) with the fitting part under the dosing mechanism (10), and thereupon under the glass pane (4) and presses the fitting part against the glass pane (4).

19. The method for gluing fitting parts to glass panes according to claim 18, **characterized in that** the application values and gluing parameters may be stored in a transponder of the fitting part by means of the control (9).

20. The method for gluing fitting parts to glass panes according to claim 18, **characterized in that** the curing time of the adhesive is shortened by means of a lamp (21).

21. The method for gluing fitting parts to glass panes with a device according to the claims 1 to 14.

## Revendications

1. Dispositif d'encollage pour coller des pièces de ferrure sur des vitres en verre, avec une table (2) pour poser des vitres en verre (4), une réception (8) pour une pièce de ferrure, un dispositif de dosage (10) pour l'alimentation de colle, un dispositif de durcissement (20) et une commande (9), **caractérisé en ce qu'**au moyen du dispositif de dosage (10) la colle est appliquée par gouttes sur la pièce de ferrure, et la réception (8) positionne la pièce de ferrure pour le collage sur la partie inférieure de la vitre en verre (4).

2. Dispositif d'encollage selon la revendication 1, **caractérisé en ce que** la table (2) présente un support avec des brosses (3).

3. Dispositif d'encollage selon la revendication 1 ou 2, **caractérisé en ce que** la table (2) présente un dispositif pour l'immobilisation de la vitre en verre (4).

4. Dispositif d'encollage selon la revendication 1, **caractérisé en ce que** le dispositif d'encollage (1) présente une machine d'encollage (5), sur ou à laquelle la réception (8) et le dispositif de durcissement (20) sont agencés.

5. Dispositif d'encollage selon la revendication 4, **caractérisé en ce que** la machine d'encollage (5) peut être déplacée le long de la table (2) avec une direction de déplacement (X).

6. Dispositif d'encollage selon la revendication 1, **caractérisé en ce que** la réception (8) peut être déplacée le long d'un trajet de déplacement (Y).

7. Dispositif d'encollage selon la revendication 5 et/ou 6, **caractérisé en ce que** le déplacement de la machine d'encollage (5) et de la réception (8) se fait par moteur.

8. Dispositif d'encollage selon la revendication 7, **caractérisé en ce que** la machine d'encollage (8) et la réception (8) présentent chacune un dispositif de positionnement (6).

9. Dispositif d'encollage selon la revendication 1, **caractérisé en ce que** la réception (8) présente un dispositif de pression pour presser la pièce de ferrure contre la vitre en verre (4).

10. Dispositif d'encollage selon la revendication 1, **caractérisé en ce que** le dispositif de dosage (10) présente un réservoir (11), depuis lequel la colle est transportée au moyen d'une conduite (12) vers une aiguille de dosage (13).

11. Dispositif d'encollage selon la revendication 10, **caractérisé en ce que** le réservoir (11) est sous pression.

12. Dispositif d'encollage selon la revendication 1, **caractérisé en ce que** le dispositif de durcissement (20) présente une source rayonnante (21) et un dispositif de mesure (22).

13. Dispositif d'encollage selon l'une des revendications précédentes, **caractérisé en ce que** la commande (9) automatiquement positionne la pièce de ferrure sous la vitre en verre (4).

14. Dispositif d'encollage selon l'une des revendications précédentes, **caractérisé en ce que** la commande (9) mémorise tous les paramètres d'encollage et d'application pertinents dans un transpondeur, qui fait partie de la pièce de ferrure.

15. Méthode pour coller des pièces de ferrure sur des vitres en verre, dans laquelle une quantité de colle dosée est appliquée par gouttes sur la pièce de ferrure au moyen d'un dispositif de dosage (10), et la pièce de ferrure est positionnée sous la vitre en verre (4) et est collée sur la face inférieure de la vitre en verre (4).

16. Méthode pour coller des pièces de ferrure sur des vitres en verre selon la revendication 15, **caractérisée en ce que** la pièce de ferrure est déplacée au moyen d'une machine d'encollage (5) et d'une réception (8).

17. Méthode pour coller des pièces de ferrure sur des vitres en verre selon la revendication 15, **caractérisée en ce que** les bords de la vitre en verre (4) sont détectés comme coordonnés XY et les valeurs d'application et les paramètres d'encollage sont mémorisés dans une commande (9).

18. Méthode pour coller des pièces de ferrure sur des vitres en verre selon la revendication 16 et 17, **caractérisée en ce qu'**une commande (9) automatiquement positionne la machine d'encollage (5) et la réception (8) avec la pièce de ferrure sous le dispositif de dosage (10) et ensuite sous la vitre en verre (4), et presse la pièce de ferrure contre la vitre en verre (4).

19. Méthode pour coller des pièces de ferrure sur des vitres en verre selon la revendication 18, **caractérisée en ce que** les valeurs d'application et les paramètres d'encollage sont mémorisés au moyen de la commande (9) dans un transpondeur de la pièce de ferrure.

20. Méthode pour coller des pièces de ferrure sur des vitres en verre selon la revendication 18, **caractérisée en ce que** le temps de durcissement de la colle est raccourcit au moyen d'une source rayonnante (21).

21. Méthode pour coller des pièces de ferrure sur des vitres en verre avec un dispositif selon les revendications 1 à 14.
